# EUROPEAN PATENT APPLICATION

(11) **EP 3 485 769 A1**
(43) Date of publication of application: **22.05.2019**
(21) Application number: 18193935.6
(22) Date of filing: 12.09.2018
(51) Int. Cl.: A47J 27/02

(54) **A HIGH-SPEED HEATING AND ENERGY SAVING APPARATUS**

(30) Priority: 20.11.2017 TW 10640149
(71) Applicant: Tseng, Kuang-Tsung, Taoyuan City 325 (TW); Tseng, Po-Hsun, Taoyuan City 325 (TW)
(72) Inventor: Tseng, Kuang-Tsung, Taoyuan City 325 (TW); Tseng, Po-Hsun, Taoyuan City 325 (TW)
(74) Representative: Kraus & Weisert Patentanwälte PartGmbB

(57) **Abstract**

This invention provides a high speed heating and energy saving apparatus (1) comprising at least one vertical barrel (11) having at least one chamber (12), said vertical barrel extends downwardly thereby forming said chamber, said chamber (12) being terminated at the lower end by a base (3) and at least one elongated hollow structure (2) extends upwardly from said base (3) of said barrel (11); wherein the internal surface of said elongated hollow structure (2) is positioned at heating surface and the space surrounded by said internal surface of said elongated hollow structure is a trough-like heat concentration shield (2A); wherein the external surface of said elongated hollow structure is the thermal conductive shield (2B) and positioned in said chamber (12). This invention can improve the thermal conductive efficiency, lessen boiling time and achieve energy saving.

## Description

### NAME OF THE INVENTION

A high-speed heating and energy saving apparatus

### FIELD OF THE INVENTION

This present invention relates to a heating barrel, and it more specifically relates to a high speed heating and energy saving apparatus that saves energy by increasing heating efficiency.

### BACKGROUND OF THE INVENTION

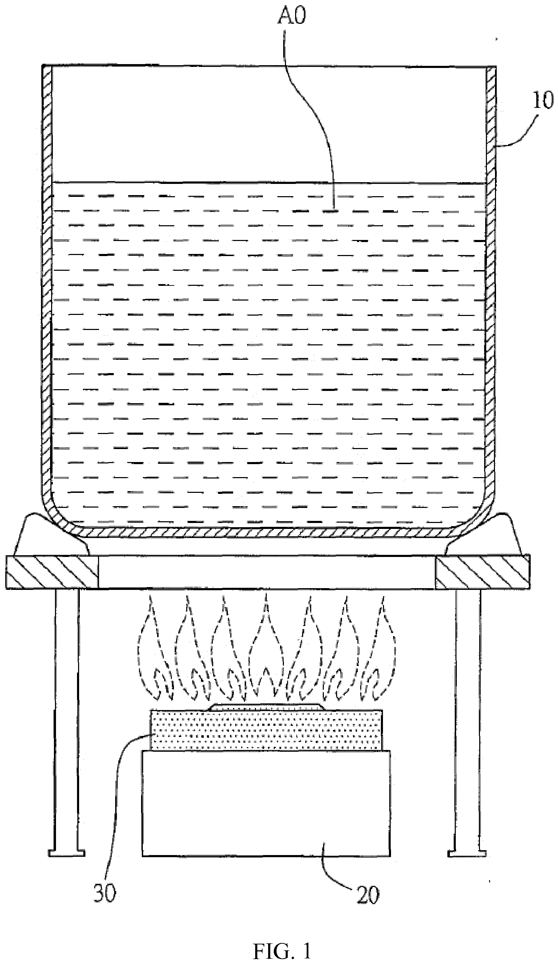

Referring to FIG.1, a traditional flat barrel-shaped cooking pot is illustrated. Flat barrel-shaped pot 10, used for heating a great amount of water A0, which comprises a burner base 20 beneath the flat barrel-shaped pot 10, and a burner stove 30 on top of the burner base 20 for the flat barrel-shaped pot 10. With the burner stove turned on and heating the flat barrel-shaped pot 10, the water A0 is boiled in the flat barrel-shaped pot 10. When water A0 starts boiling, the burner stove 30 may be turned off or switched to low flame to maintain heat.

Commonly used purposes of boiling a large amount of water A0 include water used in beverage stores, water used in kitchen at schools or restaurants and water used for epilation in slaughterhouse, typically require boiling water A0 of at least 6 liters or above to fulfill the economic efficiency. However, boiling great amount of water A0 (more than 100 liters) in a flat barrel-shaped pot costs approximately 120-150 minutes. Therefore, cooking water A0 is not only time consuming, but also wasting a great amount of fuel energy.

In light of this situation, in order to improve the deficiency of traditional flat barrel-shaped pots such as wasted fuel energy, low thermal conduction efficiency and long period of boiling time, the inventors developed a high-speed heating and energy saving apparatus to lessen the boiling time upon further research. By increasing the thermal conductivity efficiency and lessening the boiling time, this invention achieves energy saving.

### SUMMARY OF THE INVENTION

This invention aims to provide a high-speed heating and energy saving apparatus, which increases the flame height, elevates the thermal potential energy, increases the heat conductive area, and quickly increase the fluid kinetic energy. This invention can overcome the time consuming and energy wasting problems of traditional flat barrel-shaped cooking pot.

In order to achieve the aforementioned purposes, this invention provides a high speed heating and energy saving apparatus comprising: at least one vertical barrel having at least one chamber, said vertical barrel extends downwardly thereby forming said chamber, said chamber being terminated at the lower end by a base and at least one elongated hollow structure extends upwardly from said base of said barrel; wherein the internal surface of said elongated hollow structure is trough-like heat concentration shield positioned at the heating surface; wherein the external surface of said elongated hollow structure is the thermal conductive shield and positioned in said chamber.

The said high speed heating and energy saving apparatus, wherein a plurality of said elongated hollow structures are circularly mounted to said base of barrel.

According to this invention, this vertical barrel comprises at least one or a plurality of elongated hollow structures, wherein the external surface of the elongated hollow structure is a thermal conductive shield and the internal surface of the elongated hollow structure is a trough-like heat concentration shield. The trough-like heat concentration shield can elevate the flame height, elevate the thermal potential energy and quickly increase the temperature by expanding its structure and interspace. On the other hand, said thermal conductive shield can increase the thermal conductive surface of the chamber inside the vertical barrel, increase the thermal conductivity efficiency and the kinetic energy of the aqueous solution, thereby causing the aqueous solution to reach the boiling point faster. Therefore, the high-speed heating and energy saving apparatus in this invention benefits such as elevating flame height, increasing thermal potential energy, expanding the area of heat concentration and increasing the thermal conductivity surface. Thus, this invention can lessen the water boiling time and achieve the purpose of saving energy.

### BRIEF DESCRIPTION OF THE DRAWINGS

FIG. 1 is a schematic view of a traditional flat barrel-shaped cooking pot.
FIG. 2 is a perspective view of the high-speed heating and energy saving apparatus of the first embodiment of the present invention.
FIG. 3 is a cross sectional view of the high-speed heating and energy saving apparatus of the first embodiment of the present invention.
FIG. 4 is a top view of the high-speed heating and energy saving apparatus of the first embodiment of the present invention.
FIG. 5 is a schematic view of the high-speed heating and energy saving apparatus of the first embodiment of the present invention equipped with foot stand.
FIG. 6 is a schematic view of the high-speed heating and energy saving apparatus of the first embodiment of the present invention while heating.
FIG. 7 is a perspective view of the high-speed heating and energy saving apparatus of the second embodiment of the present invention.
FIG. 8 is a cross sectional view of the high-speed heating and energy saving apparatus of the second embodiment of the present invention.

### DETAILED DESCRIPTION OF THE INVENTION

The embodiments below are used for illustrating the objectives and effects of the present invention, and are not to be construed as constituting any limitations of the invention.

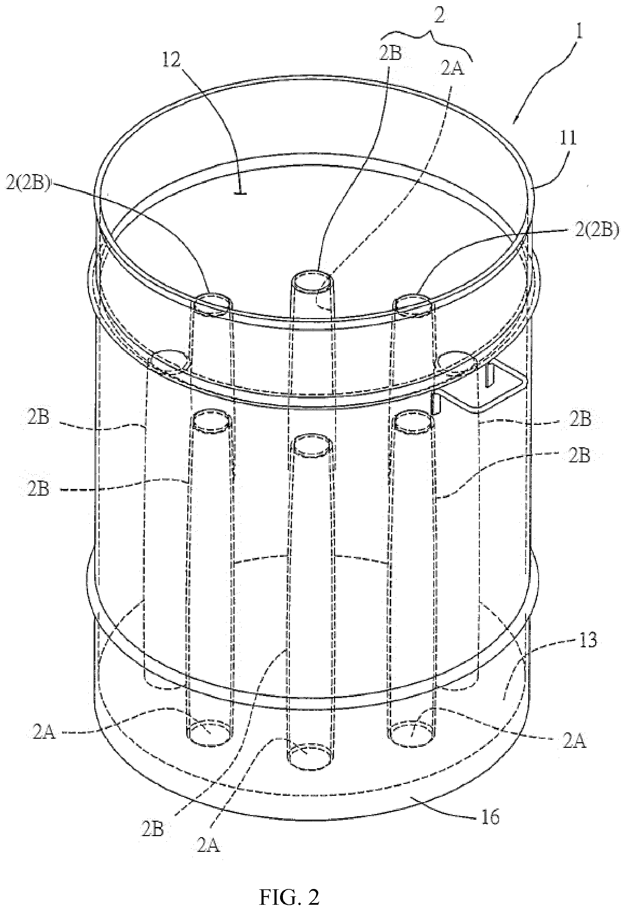

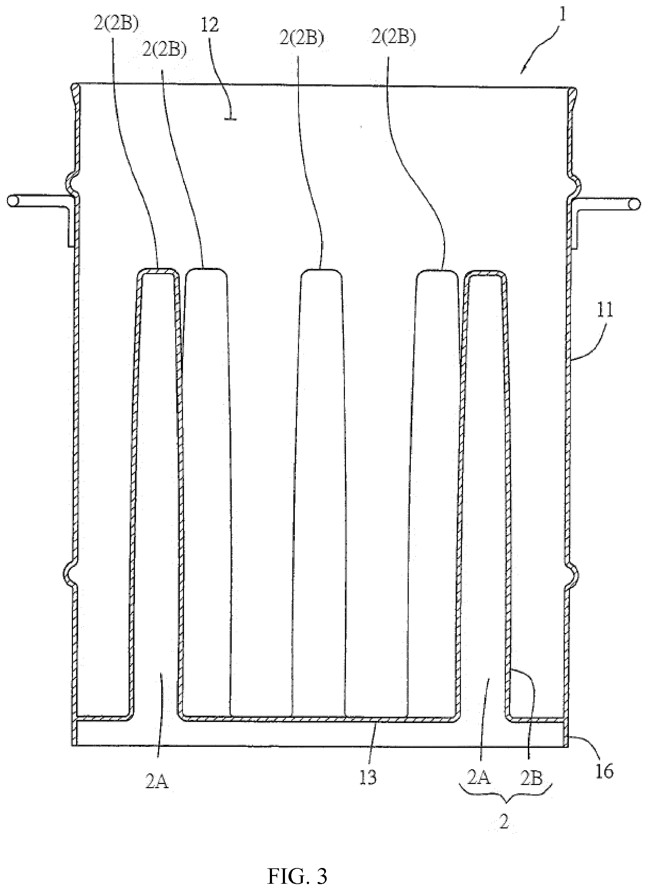

Referring to FIGS. 2 to 6, the first embodiment of the present invention is described below. First, referring to FIGS. 2 and 3, this invention provides a high speed heating and energy saving apparatus 1 comprising: at least one vertical barrel 11 having at least one chamber, said vertical barrel 11 extends downwardly thereby forming said chamber 12, said chamber 12 being terminated at the lower end by a base 13 and at least one elongated hollow structure 2 extends upwardly from said base of said barrel 11; wherein the internal surface of said elongated hollow structure is a trough-like heat concentration shield 2A positioned at the heating surface; wherein the external surface of said elongated hollow structure is the thermal conductive shield 2B and positioned in said chamber. The trough-like heat concentration shield 2A and the thermal conductive shield 2B are integrally formed into the elongated hollow structure 2.

The high-speed heating and energy saving apparatus 1, wherein ideally is integrally formed and made from the same material. Examples of the material of the high-speed heating and energy saving apparatus 1 that may be used include, but are not limited to metal or other thermal conducting non-metal materials.

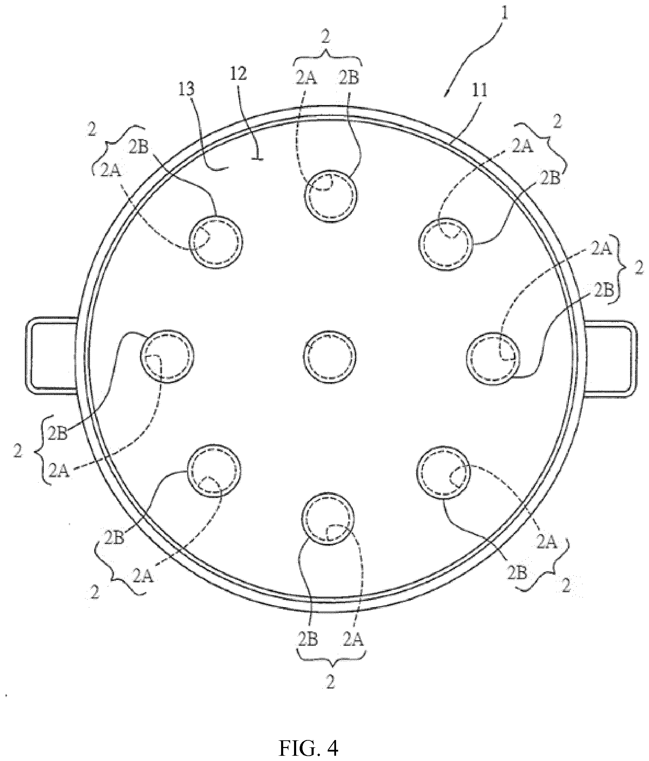

Moreover, as shown in FIG. 4, the elongated hollow structures 2 are evenly and circularly distributed on the base.

Furthermore, a reinforcement ring 16 can be added to the bottom portion 13 of the high-speed heating and energy saving apparatus 1.

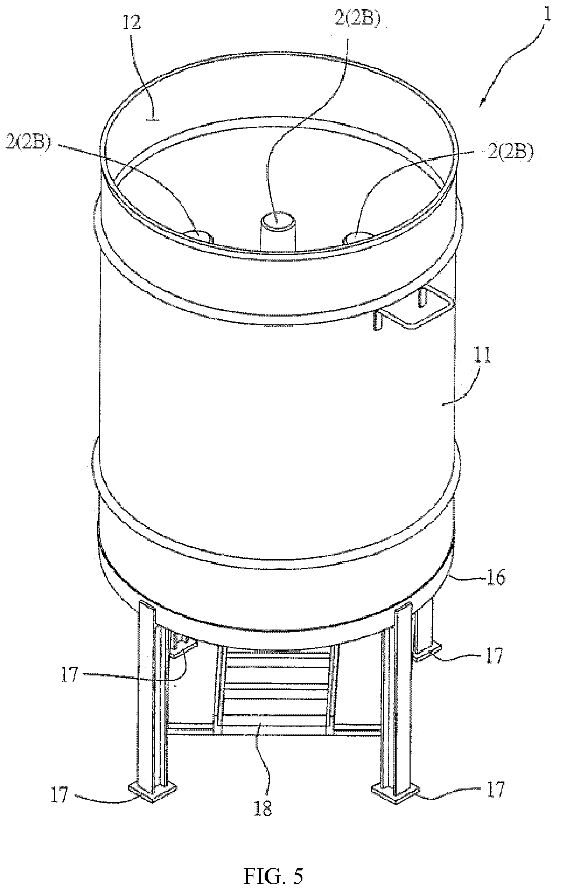

Referring to FIG.5, furthermore, the reinforcement ring 16 may include four foot stands 17 that extend downwards. A burner rack 18 is horizontally attached to the foot stands 17, and a burner stove 30 of the high-speed heating and energy saving apparatus 1 is placed above the burner rack 18.

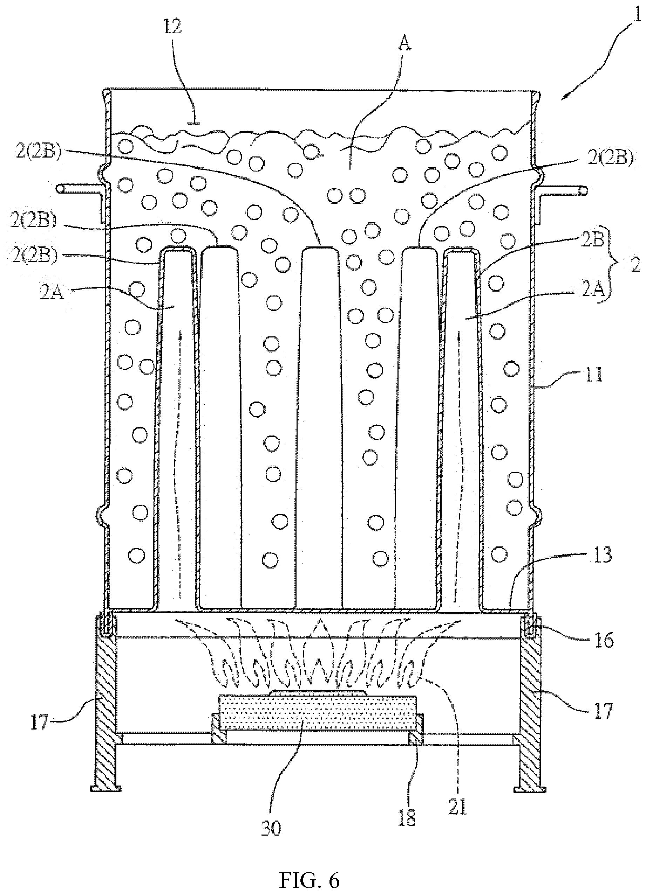

Referring to FIG.6, when using the high-speed heating and energy saving apparatus 1, the user places a large amount of aqueous solution A into the chamber 12, then turns on the burner stove 30 and light burner flame 21 to heat the base 13 and trough-like heat concentration shield 2A. The heat is conducted to the thermal conductive shield 2B until the aqueous solution A in the chamber 12 boils. The principle is that the concentrated heat produced by the burner flame 21 can be directly conducted through the base 13 and the trough-like heat concentration shield 2A to the thermal conductive shield 2B, and have close contact with the water in aqueous solution A, which causes the convection between areas of different temperature. The thermal conductive shield 2B expands the heat concentration area through the concave upward structure of the trough-like heat concentration shield 2A, and is integrally formed with the internal surface of the thermal conductive shield 2B, resulting in the characteristic of having a three-dimensional geometrical structure. This causes a spontaneous elevation of the flame heating point, increases of the thermal conductive surface, and can speed up the boiling process of aqueous solution A. According to the calculations of the heat exchanger model and the experiment carried out using a small thermal conductive shield 15, wherein the volume estimation of the structure with diameter 60cm and height 60cm is (30cm)²π×60cm×95%= 161164 cm³=161L (aqueous solution A). This experiment is on the basis that the calculation of volume of 8 elongated hollow structures 2, (5cm)²π×45cm×8 units=28074cm³ which is approximately 28L. A double pipe gas burner can heat up 161L-28L=133L (aqueous solution A) from 25°C to 100°C in 30 minutes.

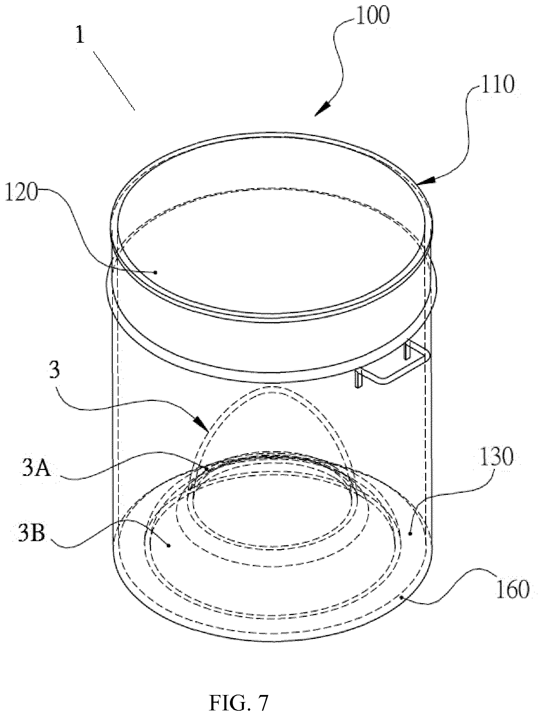

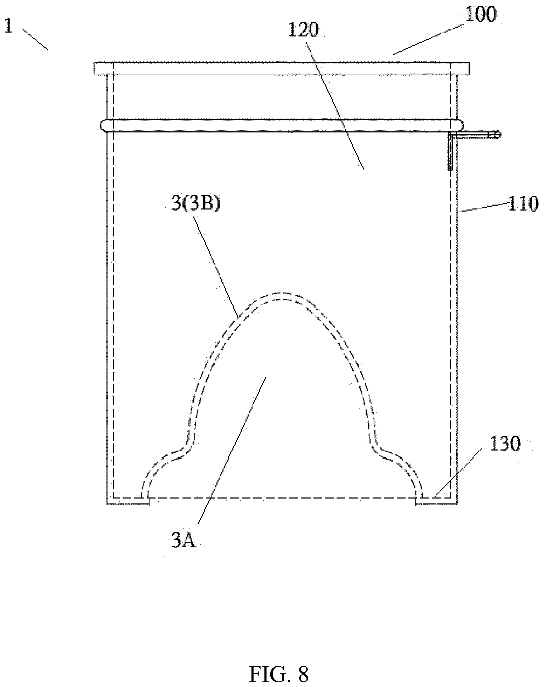

Moreover, the elongated hollow structure in this specification of present invention does not limit to a general geometric cylinder. The elongated hollow structure can be in any three-dimensional shape. For example, the elongated hollow structure can be an elongated hollow pillar with at least one flat end, a three dimensional two level protruding elongated hollow pillar structure, or a three dimensional multi-level protruding elongated hollow pillar structure. Referring to FIGS.7-8, the shape of the elongated hollow structure of the second embodiment in present invention is a three dimensional two level protruding elongated hollow pillar structure. When the high-speed heating and energy saving apparatus 1 of embodiment 2 is in use, the user places a large amount of aqueous solution A in chamber 120 and turn on the burner stove 30 to light burner flame 21. It heats up the base 130 and the two level protruding trough-like heat concentration shield 3A, thus conducting the heat to the two level protruding thermal conductive shield 3B until the aqueous solution in chamber 120 boils. The principle is that the concentrated heat produced by the burner flame 21 can be directly conducted through the base 130 and the two level protruding trough-like heat concentration shield 3A to the two level protruding thermal conductive shield 3B and have close contact with the water A0 in aqueous solution A, which causes the convection between areas of different temperature. The two level protruding thermal conductive shield 3B expands the heat concentration area through the two-part concave upward structure of the two level protruding trough-like heat concentration shield 3A, and is integrally formed with the internal surface of the two level protruding thermal conductive shield 3B, resulting in the characteristic of having a three-dimensional geometrical structure. This causes a spontaneous rise in the flame heating point, increases the thermal conductive area and enables aqueous solution A to boil rapidly. According to the calculations of the heat exchanger model and the experiment carried out using a single two level protruding thermal conductive shield 3B, wherein the volume estimation of the structure with diameter 60cm and height 60cm is (30cm)²π×60cm×95%= 161164 cm³=161L (aqueous solution A). This experiment is on the basis that the calculation of the volume using a two level protruding elongated hollow structure 3 (the surface area of the two level protruding thermal conductive shield 3A of one single two level protruding elongated hollow structure 3 is the same as the sum of surface areas of 8 thermal conductive shields 2B). When using a double pipe gas burner that has evenly distributed pipes, it can heat up from 25°C to 100°C in 30 minutes.

The principle and operating sequence according to the first embodiment are as follows:
1. At least one elongated hollow structure 2 that is evenly distributed is created in order to raise the flame height (temperature), expand the volume of flame and heat concentration, absorb the heat radiation energy and increase the heat conduction surface.
2. There should be adequate height and space in between the burner flame 21 and the base 13 for providing sufficient oxygen.
3. This invention uses the three dimensional design of the trough-like heat concentration shield 2A of the elongated hollow structure 2 to elevate flame height, absorb heat radiation energy, and increase thermal potential energy. Therefore, under the same heat source, this invention can elevate the flame height and increase its temperature, which reduces fuel consumption and lessens the boiling time.
4. At least one elongated hollow structure evenly and circularly distributed to centralize the heat source, allows the flame to shoot upwards (creating the flame rising effect). Moreover, it prevents heat effusion, elevates thermal entropy to achieve the extraordinary effect of rapidly transforming the conductive thermal kinetic energy.
5. The base 13, the surroundings of the elongated hollow structure 2 (thermal conductive shield 2B) and the top of the elongated hollow structure 2 conduct heat to the aqueous solution A in the chamber 12. Therefore, the top, bottom and the surroundings of the chamber can create a strong convection flow of aqueous solution A and thermal energy exchanges thereby. The fluid in chamber 12 can quickly heat up the aqueous solution A and the time for the aqueous solution A to boil is 25% of the time using a traditional flat pan. Hence, the high-speed heating and energy saving apparatus 1 can reduce fuel (gas) consumption.

In conclusion, this invention provides a high-speed heating and energy saving apparatus 1, which conducts heat through the elongated hollow structure 2 from the trough-like heat concentration shield 2A to the thermal conductive shield 2B and directly to the aqueous solution A. The quantity and volume of the elongated hollow structure 2 in the chamber 12 can be increased based on the actual situation, in order to elevate flame height, increase thermal potential energy and quickly boil aqueous solution A. According to the aforementioned experiments, this invention can boil aqueous solution A from 25°C to 100°C in 30 minutes, save a large amount of energy and improve time efficiency. The principle and the operating sequence of the second embodiment are the same as the first embodiment.

The types, configuration and quantity of the components in this invention are not limited to the aforementioned embodiments. Proper modifications to change the components and claims are still within the scope of the invention.

## Claims

1. A high speed heating and energy saving apparatus (1) comprising:
at least one vertical barrel (11) having at least one chamber (12), said vertical barrel extends downwardly thereby forming said chamber (12), said chamber being terminated at the lower end by a base (13) and at least one elongated hollow structure (2) extends upwardly from said base (13) of said barrel (11); wherein the internal surface of said elongated hollow structure (2) is positioned at a heating surface and the space surrounded by said internal surface of said elongated hollow structure is a trough-like heat concentration shield (2A); wherein an external surface of said elongated hollow structure is the thermal conductive shield (2B) and positioned in said chamber (12).

2. The high speed heating and energy saving apparatus (1) of Claim 1, wherein a plurality of said elongated hollow structures are circularly mounted to said base (13) of said barrel (11).

3. The high speed heating and energy saving apparatus (1) of Claim 1, wherein said elongated hollow structure (2) is an elongated hollow pillar with at least one flat end, a three dimensional two level protruding elongated hollow pillar structure, or a three dimensional multi-level protruding elongated hollow pillar structure.
